# EUROPÄISCHE PATENTSCHRIFT

(11) **EP 2 025 975 B1**
(45) Veröffentlichungstag und Bekanntmachung des Hinweises auf die Patenterteilung: **12.03.2014**
(21) Anmeldenummer: 08159718.9
(22) Anmeldetag: 04.07.2008
(51) Int. Cl.: F16H 63/38

(54) **Schaltungsanordnung zum Wählen und Schalten eines Ganges bei einem Handschaltgetriebe eines Fahrzeugs**
Shift operating apparatus for selecting and switching a gear in a manual gearbox of a vehicle
Dispositif sélecteur de vitesse destiné à sélectionner et à commuter une vitesse pour une boîte de vitesses manuelle d'un véhicule

(30) Priorität: 16.08.2007 DE 102007038605
(43) Veröffentlichungstag der Anmeldung: 18.02.2009
(73) Patentinhaber: ZF Friedrichshafen AG, 88038 Friedrichshafen (DE)
(72) Erfinder: Späth, Klaus, 88276 Berg (DE); Fischer, Dieter, 88149 Nonnenhorn (DE)

(56) Entgegenhaltungen:
- EP-A1- 0 601 741
- CH-A- 301 626
- DE-A1- 2 040 195
- DE-A1- 10 029 497
- DE-A1-102005 051 377

## Beschreibung

Die vorliegende Erfindung betrifft eine Schaltungsanordnung zum Wählen und Schalten eines Ganges bei einem Handschaltgetriebe eines Fahrzeuges gemäß der im Oberbegriff des Patentanspruches 1 näher definierten Art.

Beispielsweise aus den Druckschriften WO 031089815 A1 und DE 100 29 497 A1 ist jeweils eine elektro-pneumatische Schalteinheit für ein Fahrzeuggetriebe bekannt. Die Schalteinheit umfasst ein manuell vom Fahrzeugführer über einen Schalthebel geschaltetes Hauptgetriebe und ein über Ventile pneumatisch geschaltetes Split- und Bereichsgruppengetriebe. Der Schalthebel ist entlang eines überlagerten H-Schaltbildes bewegbar. Zum Wählen und Schalten der Gänge ist eine axial bewegbare und drehbare Schaltwelle vorgesehen.

Um Fehischaltungen von der 3/4-Schaltgasse in die 1/2-Schaltgasse oberhalb einer bestimmten Abtriebsdrehzahl bei dem Getriebe zu verhindern, ist ein Gassensperrzylinder bei der bekannten Schalteinheit vorgesehen. Der Gassensperrzylinder ist mit einer Steuereinrichtung gekoppelt, welche bei einer zu hohen Abtriebsdrehzahl ein Signal an ein den Gassensperrzylinder ansteuerndes elektropneumatisches Wegeventil gibt, so das ein Stößel des Gassensperrzylinders über einen Umlenkhebel in die Schaltwelle eingreift und diese in Richtung der rechten Schaltgasse des Schaltbildes drückt.

Im Dokument DE 2 040 195 A1 wird eine geschwindigkeitsabhängige Sperre zum Verhindern unzulässiger Rückschaltungen in Kraftfahrzeuggetrieben mit dreh- und längsverschieblicher Schaltwelle vorgeschlagen. Diese Sperre sperrt die Schaltwelle gegen ein axiales Verschieben zum Wechsel der Schaltgassen für höhere Gänge in eine Schaltgasse für niedrigere Gänge. Die Erfindung offenbart einen Verstellmotor, der die Belastung der Feder auf das die erste Sperrvorrichtung steuernde Ventil anhebt beim Umschalten des Gruppengetriebes in dem oberen Gangbereich. Als zweite in Abhängigkeit von der Fahrgeschwindigkeit wirksame Sperrvorrichtung ist ein federbelastetes Ventil angeordnet, das ein dem Hauptgetriebe vor- oder nachgeschaltetes Gruppengetriebe in Abhängigkeit von der jeweiligen Fahrgeschwindigkeit steuert.

Dokument EP 0 601 741 A1 zeigt eine Schaltanordnung mit den Merkmalen des Oberbegriffs von Anspruch 1.

Ferner ist aus der Druckschrift DE 102 51 351 A1 eine Schalteinrichtung für ein Handschaltgetriebe bekannt. Die Schalteinrichtung umfasst eine Schaltwelle, einen Anschlag für eine Bewegung der Schaltwelle in eine R-Gang-Schaltgasse und eine Anzeigeeinrichtung für die R-Gangstellung der Schaltwelle. Die Schaltwelle weist eine Vertiefung auf, die durch zwei schräge Wände begrenzt ist. Ein federbelasteter Stößel ist in Anlageposition in der Vertiefung, welches der Neutralschaltgasse entspricht. Durch das Aufeinandertreffen der Stößelspitze mit der schrägen Wand der Vertiefung wird der axialen Bewegung der Schaltwelle ein Widerstand entgegengesetzt, wodurch ein Anschlag beziehungsweise eine Sperre gegen ein unbeabsichtigtes Eindringen in die R-Gang-Schaltgasse realisiert wird. Erst wenn der Widerstand absichtlich überwunden wird und die Abschrägungen aneinander entlanggleiten, kann der Schalthebel in die Richtung der R-Gang-Schaltgasse verschoben werden. Der Stößel wirkt dabei auf einen Stift eines elektrischen Schalters, der das Erreichen der R-Gang-Schaltgasse anzeigt und ein entsprechendes Signal ausgibt.

Es hat sich gezeigt, dass es bei dynamischen Wählbewegungen möglich ist, dass die Schaltwelle die R-Gangsperre aufgrund der Dynamik der axialen Bewegung überdrückt, so dass unbeabsichtigt der R-Gang geschaltet wird. Dies kann zu starken Ratschgeräuschen im Getriebe führen und bei häufiger Fehlbedienung kann sogar ein Ausfall des Getriebes auftreten. Somit wird der Handkraftanteil, welcher noch benötigt wird, um die Sperrkraft zu überbrücken bei hoher Wähl-Dynamik immer geringer. Um dies zu verhindern, kann die Sperrkraft für die R-Gangsperre erhöht werden. Dies bewirkt allerdings, dass bei Schaltungen aus der 1/2-Schaltgasse in die R-Gang-Schaltgasse deutlich höhere Entsperrkräfte aufgebracht werden müssen. Infolgedessen wird der Schaltkomfort dadurch negativ beeinflusst.

Der vorliegenden Erfindung liegt die Aufgabe zu Grunde, eine Schaltungsanordnung der eingangs beschriebenen Gattungen vorzuschlagen, bei denen die R-Gangsperre weiter verbessert wird, ohne dabei die Sperrkraft zu erhöhen.

Diese Aufgabe wird erfindungsgemäß durch die Merkmale des Patentanspruches 1 gelöst. Weitere vorteilhafte Ausgestaltungen ergeben sich insbesondere aus den jeweiligen Unteransprüchen.

Die der Erfindung zu Grunde liegende Aufgabe wird durch eine Schaltungsanordnung zum Wählen und Schalten eines Ganges bei einem Handschaltgetriebe eines Fahrzeuges mit einem entlang eines überlagerten H-Schaltbildes bewegbaren Schalthebel gelöst, der eine zum manuellen Vorwählen einer Schaltgesse axial bewegbare und zum Schalten des Ganges verdrehbare Schaltwelle betätigt, und mit einer Schaltgassensperreinrichtung zum Sperren einer Schaltung von der 3/4-Schaltgasse in die 1/2-Schaltgasse bei einer unzulässigen Fahrzeuggeschwindigkeit sowie mit einem R-Gang-Schalter, welcher vor dem Erreichen der R-Gang-Schaltgasse durch eine R-Gangsperre aktiviert wird, wobei die Schaltgassensperreinrichtung auch zum Sperren des R-Ganges und/oder des Kriechganges verwendet wird.

Gemäß der Schaltungsanordnung ist die Gassensperreinrichtung über das Fahrzeug-Steuergerät elektronisch zur Signalübertragung mit dem R-Gang-Schalter gekoppelt. Auf diese Weise können die zur Ansteuerung der Schalt-gassensperreinrichtung erforderlichen Signale übertragen und erhalten werden.

Um weitere Daten über z.B. die aktuelle Fahrzeuggeschwindigkeit zu erhalten, kann vorgesehen sein, dass das Fahrzeug-Steuergerät mit einem Drehzahlsensor oder dergleichen gekoppelt ist, der vorzugsweise mit der Abtriebsseite des Getriebes in Verbindung steht.

Die Schaltgassensperreinrichtung wird über das Fahrzeug-Steuergerät vor dem oder beim Erreichen der R-Gang-Schaltgasse aktiviert, wenn beispieilsweise ein bestimmter Grenzwert der Fahrzeuggeschwindigkeit noch überschritten ist. Kurz vor dem Erreichen der R-Gang-Schaltgasse kann der R-Gang-Schalter dem Fahrzeug-Steuergerät ein entsprechendes Signal übermitteln.

Vorzugsweise kann die Schaltgassensperreinrichtung ein mit dem Fahrzeug-Steuergerät gekoppeltes Magnetventil oder dergleichen zum Ansteuern eines Zylinders umfassen, der einen Umlenkhebel betätigt, der mit der Schaltwelle in Eingriff steht, um die Schalwelle in Richtung der 3/4-Schaltgasse axial zu bewegen. Somit wird das Wählen in die R-Gang- und/oder Kriechgang-Schaltgasse bei unzulässigen Fahrzeuggeschwindigkeiten verhindert. Es sind auch andere konstruktive Ausgestaltungen möglich.

Die bereits vorhandene R-Gangsperre kann einen federbelasteten R-Gangriegel aufweisen, der mit einer Ausnehmung, welche R-Gang-Schaltgassen seitig durch eine Schulter begrenzt ist, an der Schaltwelle in Anlage steht, wobei der R-Gangriegel bei Erreichen der R-Gang-Schaltgasse einen Schalter oder dergleichen betätigt, der dann ein Signal "R-Gang-Schaltgasse erreicht" zum Beispiel an das Steuergerät sendet. Es sind auch andere Ausgestaltungen bei dem R-Gang-Schalter möglich.

Auf diese Weise wird ein unbeabsichtigtes Schalten in den R-Gang oder den Kriechgang durch die Verwendung einer bereits vorhandenen Sperreinrichtung sicher verhindert, ohne dass dazu eine Erhöhung der aufzubringenden Sperrkraft erforderlich ist. Zudem sind keine zusätzlichen Schalt- oder Getriebekomponenten erforderlich.

Ein Fahrzeug-Steuergerät bildet den Fahrzeug-Leitrechner oder dergleichen, in dem über das Fahrzeugnetzwerk relevante Fahrzeugdaten gesammelt und verarbeitet werden. Es sind auch andere Ansteuerungsarten denkbar.

Aufgrund von Signalen kann die Schaltgassensperreinrichtung derart angesteuert werden, dass der Fahrer beispielsweise in einer Getriebe-Neutralstellung in die R-Gang-Schaltgasse wählen kann, jedoch solange eine vorgegebene Fahrgeschwindigkeit nicht unterschritten wird, wird die aktivierte Schaltgassensperreinrichtung die Schaltwelle axial in die 3/4-Schaltgasse zurückschieben. Dabei ist die Ansteuerung der einzelnen Einrichtungen beliebig.

Nachfolgend wird die vorliegende Erfindung anhand der Zeichnungen näher erläutert. Es zeigen:
- Fig. 1: eine Teilansicht einer Prinzipdarstellung einer möglichen Ausführungsvariante einer erfindungsgemäßen Schaltungsanordnung und
- Fig. 2: eine geschnittene Teilansicht der erfindungsgemäßen Schaltungsanordnung.

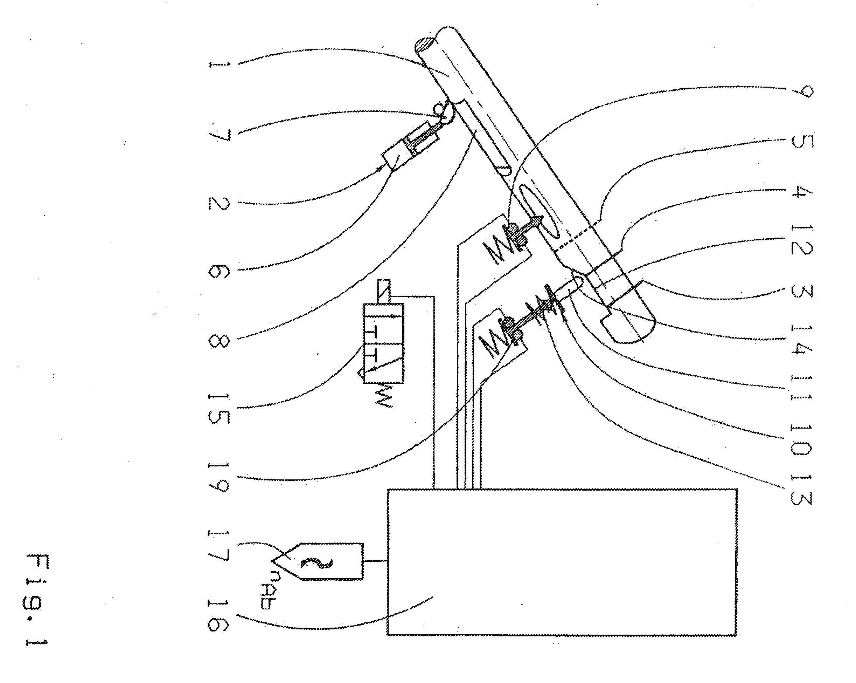

In Fig. 1 ist ein Ausschnitt einer Prinzipdarstellung einer erfindungsgemäß vorgeschlagenen Schaltungsanordnung zum Wählen und Schalten eines Ganges bei einem Handschaltgetriebe eines Fahrzeuges dargestellt, wobei lediglich die für die Erfindung relevanten Bauteile gezeigt und beschrieben werden.

Die Schaltungsanordnung umfasst eine Schaltwelle 1, die mit einem nicht weiter dargestellten Schalthebel gekoppelt ist, der entlang eines überlagerten H-Schaltbildes bewegbar ist, wobei in dem H-Schaltbild ein R-Gang und ein Kriechgang gegenüberliegend angeordnet sind. Die Schaltwelle 1 ist zum manuellen Vorwählen einer Schaltgasse axial bewegbar und zum Schalten des Ganges verdrehbar gelagert.

Um eine Schaltung von der 3/4-Schaltgasse in die 1/2-Schaltgasse bei unzulässigen Fahrzeuggeschwindigkeiten zu verhindern, ist eine Schaltgassensperreinrichtung 2 an der Schaltwelle 1 vorgesehen. Die Position der 3/4-Schaltgasse ist mit der Bezugszahl 3, die Position der 1/2-Schaltgasse mit der Bezugszahl 4 und die Position der R-Gang-Schaltgasse mit der Bezugszahl 5 an der Schaltwelle 1 gekennzeichnet.

Die Schaltgassensperreinrichtung 2 umfasst im Wesentlichen einen über einen Zylinder 6 betätigbaren Umlenkhebel 7, wobei der Zylinder 6 über ein Magnetventil 15 beispielsweise mit Luft zum Ansteuern des Umlenkhebels 7 versorgt wird. Der Umlenkhebel 7 steht mit einer Aussparung 8 an der Schaltwelle 1 in Eingriff, um die Schaltwelle 1 in axiale Richtung wieder in die 3/4-Schaltgasse 3 zurück zu schieben, wenn die Schaltgassensperreinrichtung 2 aktiviert ist. Ferner ist ein Schalter 9 zum Anzeigen der Getriebe-Neutralstellung an der Schaltwelle 1 vorgesehen.

Um das Schalten des R-Ganges mechanisch zu verhindern, ist eine R-Gangsperre 10 an der Schaltwelle 1 vorgesehen. Die R-Gangsperre 10 umfasst einen R-Gangriegel 11, der in Anlage mit einer Ausnehmung 12 an der Schaltwelle 1 steht. Die Anpresskraft des R-Gangriegels 11 wird durch eine Feder 13 sichergestellt. Die Ausnehmung 12 ist R-Gang-Schaltgassen seitig durch eine Schulter 14 begrenzt. Auf diese Weise kann der R-Gangriegel 11 nur durch Aufbringen einer der Feder 13 entgegen wirkenden Entsperrkraft gelöst werden, um in die R-Gang-Schaltgasse 5 bewegt zu werden.

An der R-Gangsperre 10 ist zudem ein z. B. elektrischer R-Gang-Schalter 19 angeordnet, der betätigt wird, sobald der R-Gangriegel 11 durch die aufgebrachte Entsperrkraft gelöst und in Richtung der R-Gang-Schaltgasse 5 bewegt wird.

Das Magnetventil 15 zur Ansteuerung der Schaltgassensperreinrichtung 2, der Getriebe-Neutral-Schalter 9 und der R-Gang-Schalter 19 sind elektronisch mit einem Fahrzeug-Steuergerät 16 verbunden, welches durch entsprechende Verbindungslinien in Fig. 1 angedeutet ist. Auf diese Weise werden sämtliche für die Schaltung relevanten Signale über das Fahrzeugnetzwerk an das Steuergerät 16 übertragen und dort verarbeitet, um eine entsprechende Ansteuerung der einzelnen Einrichtung zu ermöglichen.

Um auch Signale über die Fahrzeuggeschwindigkeit zu erhalten, ist das Steuergerät 16 mit einem Drehzahlsensor 17 gekoppelt. Weitere für die Schaltungsansteuerung erforderliche Komponenten und Bauteile werden nicht weiter beschrieben, da diese für die Erfindung beliebig ausgestaltet sein können.

Erfindungsgemäß wird die Schaltgassensperreinrichtung 2, welche ein unbeabsichtigtes Schalten von der 3/4-Schaltgasse 3 in die 1/2-Schaltgasse 4 verhindert, zusätzlich auch als Sperre bzw. Gassenabsicherung für den R-Gang und/oder den Kriechgang verwendet. Hierzu werden die Signale des vorhandenen Getriebe-Neutral-Schalters 9 und des R-Gang-Schalters 19 eingesetzt. Der Fahrer kann zwar von der Getriebeneutral-Stellung in die R-Gang-Schaltgasse 5 wählen, jedoch wird, solange eine vorgegebene Fahrgeschwindigkeit nicht unterschritten wird, die Schaltwelle 1 durch die nun aktivierte Schaltgassensperreinrichtung 2 in die 3/4-Schaltgasse 3 zurückgeschoben. Die Schaltgassensperreinrichtung 2 wird über das Steuergerät 16 bei aktivierten R-Gang-Schalter 19 betätigt.

Da sich der R-Gang bei dem Schaltbild der erfindungsgemäßen Schaltungsanordnung gegenüber einem Kriechgang befindet, kann so auch ebenso eine ungewollte Schaltung des Kriechganges verhindert werden.

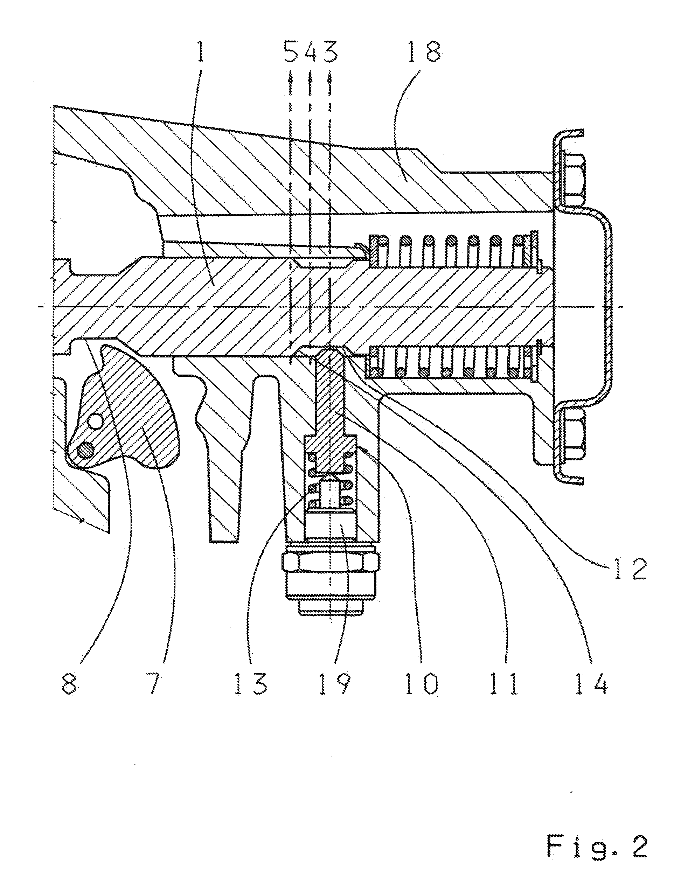

Fig. 2 zeigt eine geschnittene Teileinsicht der beschriebenen Schaltungsanordnung, wobei auch hier nur die für die Erfindung relevanten Bauteile beschrieben werden.

Die Schaltungsanordnung umfasst die in einem Gehäuse 18 axial verschiebbar und verdrehbar gelagerte Schaltwelle 1. Die Schaltwelle 1 befindet sich in einer axialen Position, in der sich der R-Gangriegel 11 in der 3/4-Schaltgassenposition 3 befindet. Sobald sich der R-Gangriegel 11 entlang der Ausnehmung 12 durch axiales Verschieben der Schaltwelle 1 in die 1/2-Schaltgassenposition 4 bewegt und eine unzulässige Fahrzeuggeschwindigkeit vorliegt, kann der Umlenkhebel 7 der Schaltgassensperreinrichtung 2 in die Aussparung 8 der Schaltwelle 1 derart eingreifen, dass die Schaltwelle 1 axial zurück geschoben wird, bis sich der R-Gangriegel 11 wieder in der 3/4-Schaltgassenposition 3 befindet.

Erfindungsgemäß wird durch die Schaltgassensperreinrichtung 2 zusätzlich zu der bereits vorhandenen R-Gangsperre 10 eine Gassenabsicherung auf einfachste Weise realisiert, ohne dabei die erforderliche Entsperrkraft bei der R-Gangsperre zu erhöhen.

### Bezugszeichen

- 1: Schaltwelle
- 2: Schaltgassensperreinrichtung
- 3: Position der 3/4-Schaltgasse
- 4: Position der 1/2-Schaltgasse
- 5: Position der R-Gang-Schaltgasse
- 6: Zylinder
- 7: Umlenkhebel
- 8: Aussparung
- 9: Getriebe-Neutral-Schalter
- 10: R-Gangsperre
- 11: R-Gangriegel
- 12: Ausnehmung
- 13: Feder
- 14: Schulter
- 15: Magnetventil
- 16: Fahrzeug-Steuergerät
- 17: Drehzahlsensor
- 18: Gehäuse
- 19: R-Gang-Schalter

## Patentansprüche

1. Schaltungsanordnung zum Wählen und Schalten eines Ganges bei einem Handschaltgetriebe eines Fahrzeuges, mit einem entlang eines überlagerten H-Schaltbildes bewegbaren Schalthebel, der eine zum manuellen Vorwählen einer Schaltgasse axial bewegbare und zum Schalten des Ganges verdrehbare Schaltwelle (1) betätigt, und mit einer Schaltgassensperreinrichtung (2) zum Sperren einer Schaltung von der 3/4-Schaltgasse (3) in die 1/2-Schaltgasse (4) bei einer unzulässigen Fahrzeuggeschwindigkeit sowie mit einem R-Gang-Schalter (19), wobei die Schaltgassensperreinrichtung (2) über ein Fahrzeug-Steuergerät (16) elektronisch zur Signalübermittlung mit dem R-Gang-Schalter (19) gekoppelt ist, **dadurch gekennzeichnet, dass** die Schaltgassensperreinrichtung (2) auch zum Sperren des R-Ganges und/oder des Kriechganges verwendet wird, wobei der R-Gang-Schalter (19) vor Erreichen der R-Gang-Schaltgasse (5) durch eine R-Gangsperre (10) aktiviert wird, und wobei die Schaltgassensperreinrichtung (2) bei einem überschrittenen Grenzwert der Fahrzeuggeschwindigkeit und bei erkannter R-Gang-Schaltgasse (5) über das Fahrzeug-Steuergerät (16) aktiviert wird.

2. Schaltungsanordnung nach Anspruch 1, **dadurch gekennzeichnet, dass** das Fahrzeug-Steuergerät (16) zum Ermitteln der Fahrzeuggeschwindigkeit mit einem Drehzahlsensor (17) elektronisch gekoppelt ist.

3. Schaltungsanordnung nach einem der Ansprüche 1 oder 2, **dadurch gekennzeichnet, dass** die Schaltgassensperreinrichtung (2) ein mit dem Fahrzeug-Steuergerät (16) gekoppeltes Magnetventil (15) zum Ansteuern eines Zylinders (2) umfasst, der einen Umlenkhebel (7) betätigt, der mit der Schaltwelle (1) in Eingriff steht, um die Schaltwelle (1) in Richtung der 3/4-Schaltgasse (3) axial zu bewegen.

4. Schaltungsanordnung nach einem der Ansprüche 1 bis 3, **dadurch gekennzeichnet, dass** der R-Gang-Schalter (19) über einen federbelasteten R-Gangriegel (11) einer R-Gangsperre (10) betätigbar ist, bevor der R-Gangriegel (11) die R-Gang-Schaltgasse (5) erreicht.

5. Schaltungsanordnung nach Anspruch 4, **dadurch gekennzeichnet, dass** der R-Gangriegel (11) mit einer Ausnehmung (12) an der Schaltwelle (1) in Anlage steht, wobei der R-Gangriegel (11) vor Erreichen der R-Gang-Schaltgasse (5) den R-Gang-Schalter (19) betätigt, sodass ein entsprechendes Signal an das Fahrzeug-Steuergerät (16) übermittelbar ist.

## Claims

1. Shift arrangement for selecting and shifting a gear speed in a manual gearbox of a vehicle, having a gear shift lever which can be moved along a superimposed H shift pattern and which activates a shift shaft (1) which can be moved axially in order to manually preselect a shift gate and can be rotated in order to shift the gear speed, having a shift gate-locking device (2) for locking shifting of the 3/4 shift gate (3) into the 1/2 shift gate (4) in the event of an inadmissible speed of the vehicle and having an R gear speed switch (19), wherein the shift gate-locking device (2) is electronically coupled via a vehicle control unit (16) to the R gear speed switch (19) for transmitting signals, **characterized in that** the shift gate-locking device (2) is also used to lock the R gear speed and/or the crawler gear speed, wherein the R gear speed switch (19) is activated by an R gear speed lock (10) before the R gear speed shift gate (5) is reached, and wherein in the event of a limiting value of the vehicle speed being exceeded and the R gear speed shift gate (5) being activated the shift gate-locking device (2) is activated via the vehicle control unit (16).

2. Shift arrangement according to Claim 1, **characterized in that** the vehicle control unit (16) is coupled electronically to a rotational speed sensor (17) in order to determine the vehicle speed.

3. Shift arrangement according to one of Claims 1 and 2, **characterized in that** the shift gate-locking device (2) comprises a solenoid valve (15) which is coupled to the vehicle control unit (16) for the purpose of actuating a cylinder (2) which activates a deflection lever (7) which engages with the shift shaft (1) in order to move the shift shaft (1) axially in the direction of the 3/4 shift gate (3).

4. Shift arrangement according to one of Claims 1 to 3, **characterized in that** the R gear speed shift (19) can be activated by means of a spring-loaded R gear speed bolt (11) of an R gear speed lock (10) before the R gear speed bolt (11) reaches the R gear speed shift gate (5).

5. Shift arrangement according to Claim 4, **characterized in that** the R gear speed bolt (11) abuts with a recess (12) against the shift shaft (1), wherein the R gear speed bolt (11) activates the R gear speed switch (19) before the R gear speed shift gate (5) is reached, with the result that a corresponding signal can be transmitted to the vehicle control unit (16).

## Revendications

1. Agencement de changement de vitesses pour la sélection et le changement d'un rapport dans une boîte de vitesses manuelle d'un véhicule, comprenant un levier de changement de vitesses pouvant être déplacé le long d'un schéma de changement de vitesses en H superposé, lequel levier de changement de vitesses actionne un arbre de changement de vitesses (1) déplaçable axialement pour la présélection manuelle d'une voie de changement de vitesses et pouvant être tourné pour changer le rapport, et comprenant un dispositif de blocage de la voie de changement de vitesses (2) pour bloquer un passage de la voie de changement de vitesses 3/4 (3) à la voie de changement de vitesses 1/2 (4) dans le cas d'une vitesse inacceptable du véhicule et comprenant un dispositif de commutation pour le rapport de marche arrière (19), le dispositif de blocage de la voie de changement de vitesses (2) étant accouplé au dispositif de commutation pour le rapport de marche arrière (19) par le biais d'un appareil de commande du véhicule (16) de manière électronique en vue d'un transfert de signal, **caractérisé en ce que** le dispositif de blocage de la voie de changement de vitesses (2) est également utilisé pour bloquer le rapport de marche arrière et/ou le rapport de roulage pas, le dispositif de commutation pour le rapport de marche arrière (19) étant activé par un blocage du rapport de marche arrière (10) avant d'atteindre la voie de changement de vitesses pour le rapport de marche arrière (5) et le dispositif de blocage de la voie de changement de vitesses (2) étant activé par le biais de l'appareil de commande du véhicule (16) en cas de dépassement d'une valeur limite de la vitesse du véhicule et en cas de reconnaissance de la voie de changement de vitesses pour le rapport de marche arrière (5).

2. Agencement de changement de vitesses selon la revendication 1, **caractérisé en ce que** l'appareil de commande du véhicule (16) est accouplé de manière électronique à un capteur de vitesse de rotation (17) pour déterminer la vitesse du véhicule.

3. Agencement de changement de vitesses selon l'une quelconque des revendications 1 ou 2, **caractérisé en ce que** le dispositif de blocage de la voie de changement de vitesses (2) comprend une électrovanne (15) accouplée à l'appareil de commande du véhicule (16) pour commander un cylindre (2) qui actionne un levier de déviation (7) qui est en prise avec l'arbre de changement de vitesses (1) afin de déplacer axialement l'arbre de changement de vitesses (1) dans la direction de la voie de changement de vitesses 3/4 (3).

4. Agencement de changement de vitesses selon l'une quelconque des revendications 1 à 3, **caractérisé en ce que** le dispositif de commutation pour le rapport de marche arrière (19) peut être actionné par le biais d'un verrou de rapport de marche arrière (11) sollicité par ressort d'un blocage du rapport de marche arrière (10) avant que le verrou de rapport de marche arrière (11) n'atteigne la voie de changement de vitesses pour le rapport de marche arrière (5).

5. Agencement de changement de vitesses selon la revendication 4, **caractérisé en ce que** le verrou de rapport de marche arrière (11) est en appui avec un évidement (12) contre l'arbre de changement de vitesses (1), le verrou de rapport de marche arrière (11) actionnant le dispositif de commutation pour le rapport de marche arrière (19) avant d'atteindre la voie de changement de vitesses pour le rapport de marche arrière (5) dès qu'un signal correspondant peut être transmis à l'appareil de commande du véhicule (16).
